# EUROPEAN PATENT APPLICATION

(11) **EP 1 695 607 A1**
(43) Date of publication of application: **30.08.2006**
(21) Application number: 05253960.8
(22) Date of filing: 27.06.2005
(51) Int. Cl.: A01D 34/00, A01G 3/06, A01D 34/84, A01D 43/16

(54) **Cutting tool**

(30) Priority: 25.02.2005 GB 0503857
(71) Applicant: GMCA PTY Ltd, Victoria 3045 (AU)
(72) Inventor: Park, Keith, Pocklington York, YO42 2QN (GB)
(74) Representative: Tomkinson, Alexandra

(57) **Abstract**

A cutting tool (2) is provided for performing a cutting operation. The tool includes a cutting blade (7) provided for movement to perform the cutting operation and a guard (12) which covers at least part of the cutting blade. The tool further includes cleaning means (18), the cleaning means including a cleaning part (20) positionable within the guard and controllable to allow relative movement between the guard and the said cleaning part.

## Description

The invention to which this application relates is a tool for use in cutting and in particular, although not necessarily exclusively, to a powered garden tool which has a blade or blades which can be provided to rotate or pivot so as to provide a cutting and/or edging function on, for example the edge of a grass lawn.

The use of tools to neaten or form edges of a lawn is known. The conventional hand powered tools include two or more blades which are pivotally mounted so as to allow the same to be moved together via handles connected thereto. Grass and/or earth caught between the blades is cut. The user typically moves along an edge of the lawn, possibly following a guide line. This form of tool can be effective but can be tiring to the user due to the need to repeatedly move the handles and, if the blades are not sufficiently sharp or the grass is tough, the blades do not cut through the same properly leaving a relatively rough edge.

In order to overcome the above described problem, it is now known to provide a powered tool which incorporates a cutting blade, which can for example be in the form of a circular blade with cutting teeth around the periphery thereof. Rotation of the circular blade by a powered motor causes the teeth to advance through the grass and/or earth. The user simply has to guide the cutting head via an elongate handle connected thereto along the edge of the lawn as the blade rotates. This is advantageous compared to manual cutting tools where the user has to exert physical effort to perform the cutting operation.

A problem with the above described powered form of cutting tool is that the cutting head is relatively small as it is required to fit into relatively confined spaces while performing the cutting action, such as when it is used in proximity to a wall, hedge or the like or near a corner of the lawn. In addition, as the blade when it rotates is a safety hazard, the same needs to be guarded so as to prevent injury to a user. However, the guard also needs to be relatively small and close to the blade in order for the cutting head size to be kept small. Due to the close proximity between the blade and the inner surface of the guard it is found that cut debris, such as grass and earth, is thrown up by the blade onto the inner surface of the blade and guard, where it adheres and solidifies. Over time the debris can build up to such an extent that it can start to prevent the free rotation of the blade and generally fill the space between the blade and the guard in such a manner so as to adversely affect the cutting performance. Also, if a suction debris removal system is provided in conjunction with the cutting tool, typically in communication with the space between the guard and the blade, the build up of debris in the guard and/or on the blade can prevent the effective operation of such as system.

Conventionally, the only way in which debris can be removed from the guard and/or the blade is for the user to switch off the device and, typically with their hands and/or a relatively thin tool, manually remove the debris. Due to the proximity of the user to the cutting teeth of the blade, this can be both a difficult and potentially injurious task.

It should be appreciated that although the invention is described with reference to a gardening tool, the problems and solutions as herein described are found with any cutting blade for which access to the same is at least partially restricted, such as for example via a blade guard and which, when the blade is used, creates debris which can become trapped on the inner surface of the guard, on the surface of the blade and/or between the blade and the guard.

The aim of the present invention is to provide a tool which includes a blade or blades for use in cutting, and to provide a way in which debris which builds up on or between the blade and/or the guard for the same can be removed effectively.

In a first aspect of the invention there is provided a tool for performing a cutting operation, said tool including at least one cutting blade provided for movement to perform the cutting operation and a guard which covers at least part of the cutting blade, and wherein the tool further includes cleaning means, said cleaning means including a cleaning part positionable within the guard and controllable to allow relative movement between the guard and the said cleaning part.

The cleaning part is positioned close to, adjacent to or on the inner surface of the guard such that relative movement between the cleaning part and the guard causes the part to remove debris which may be stuck to the inner surface of the guard.

The cleaning part or a further part can be positioned close to, adjacent to or on a surface of the cutting blade to allow removal of debris from the surface of the blade.

In one embodiment the cleaning part is connected, either directly or indirectly, to a portion which is located externally of the guard and manipulation of this external portion causes the relative movement of the part within the guard. This avoids the need for the user to place any part of their anatomy in contact with the blade or within the guard to perform the cleaning operation. The external portion in one example is in the form of a lever or some other suitable user actuation means.

In one embodiment the cleaning part within the guard is provided in the form of a scraper which, when moved, moves in contact with or close to the internal surface of the guard and/or blade such that any debris located on said surfaces is scraped off by the movement of the cleaning means part. The scraper can be any suitable shaped member having a sharp or blunt edge or edges which allows removal of debris from a surface, such as a plate member or relatively thin elongate member.

In one embodiment the cutting blade is circular and is provided for rotation about an axis.

The cleaning means can be mounted on the same axis/axel as the cutting blade or can be mounted coaxially thereto to allow the movement of the cleaning part within the guard in the same or a similar path as the arc of the inner face of the guard and/or the blade.

In normal use of the tool, the axis of the cutting blade is typically substantially horizontal.

In an alternative embodiment the cleaning means is mounted on the guard and/or blade and slidingly movable with respect thereto such that the part within the guard follows the shape of the internal surface of the guard and/or surface of the blade to perform the cleaning action.

In one embodiment the tool is provided with a cutting head and the cleaning means is provided with a portion mounted at the cutting head but on the external surface thereof to allow operation by the user. Alternatively the said portion is mounted on handle means connected to the cutting head.

User actuation means can be provided on or associated with the cutting head to allow user actuation of the cleaning means.

Preferably the cleaning means and in particular the part within the guard is provided of sufficient strength and rigidity such that a satisfactory cleaning operation can be achieved with one or a small number of passes of the cleaning means part along the guard and/or blade

Typically, when not being used for cleaning, the part which lies within the guard is positioned in a recess position on the inside surface of the guard or at a withdrawn location from the blade and/or guard such as at an end of the guard. This prevents the cleaning means part from itself becoming a possible collector of debris and/or from obstructing free movement of the cutting blade.

By providing the cleaning means in accordance with the invention there is provided the ability to remove debris from the interior of the guard, between the guard and the blade and/or from the blade itself, without the user having to physically place part of their anatomy, such as their hand or fingers, within the potentially hazardous area of the blade teeth.

In one embodiment the tool is a garden tool in the form of a powered edger for cutting or neatening the edge of a lawn, said tool provided with a cutting head, an edge of which is placed against the edge of the lawn and depending upwardly from the cutting head is an elongate member which allows the user to guide and position the cutting head.

The lawn edger can include a cutting head, one or more wheel or roller members and handle means.

Preferably the tool includes powered drive means to drive movement of the cutting blade in use.

Handle means can be provided on or integrally formed with the elongate member.

In one embodiment the cutting head includes a circular blade provided for rotation, a motor for providing the powered rotation and a guard, said guard enclosing at least part of the blade so as to minimise access to the blade in use.

In a further aspect of the invention there is provided a tool for performing a cutting operation, said tool including at least one cutting blade provided for movement to perform the cutting operation, a guard which covers at least part of the blade and wherein the tool further includes cleaning means, said cleaning means including a part provided to move with respect to the guard to remove debris from the internal surface thereof and a portion which is external of the guard to allow user movement of the said part.

Thus there is provided a cleaning means which is operable by the tool user at a location remote from and safer than the area which is to be cleaned.

A specific embodiment of the invention will now be described with reference to the accompanying drawings wherein;
Figures 1-2 illustrate first and second perspective views of one embodiment of the invention; and
Figure 3 illustrates schematically the operation of the cleaning means in accordance with one embodiment of the invention.

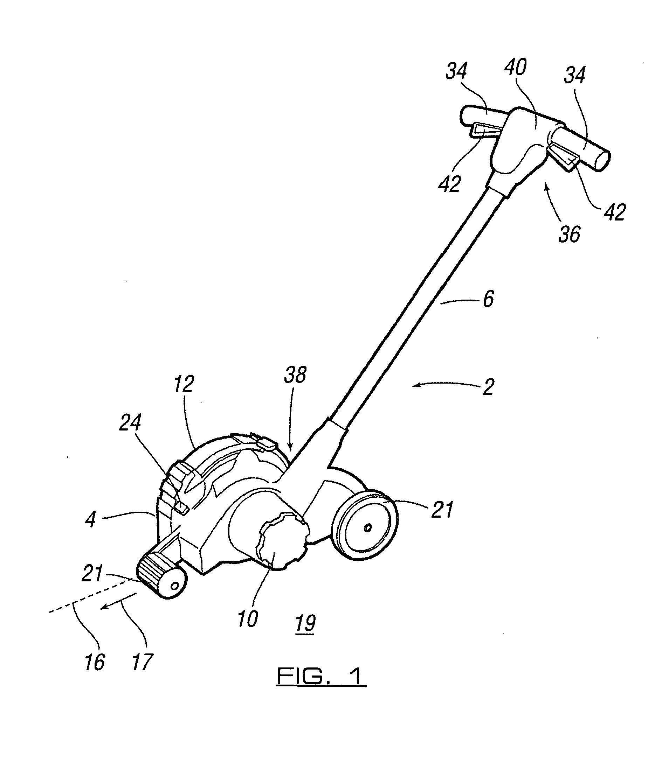

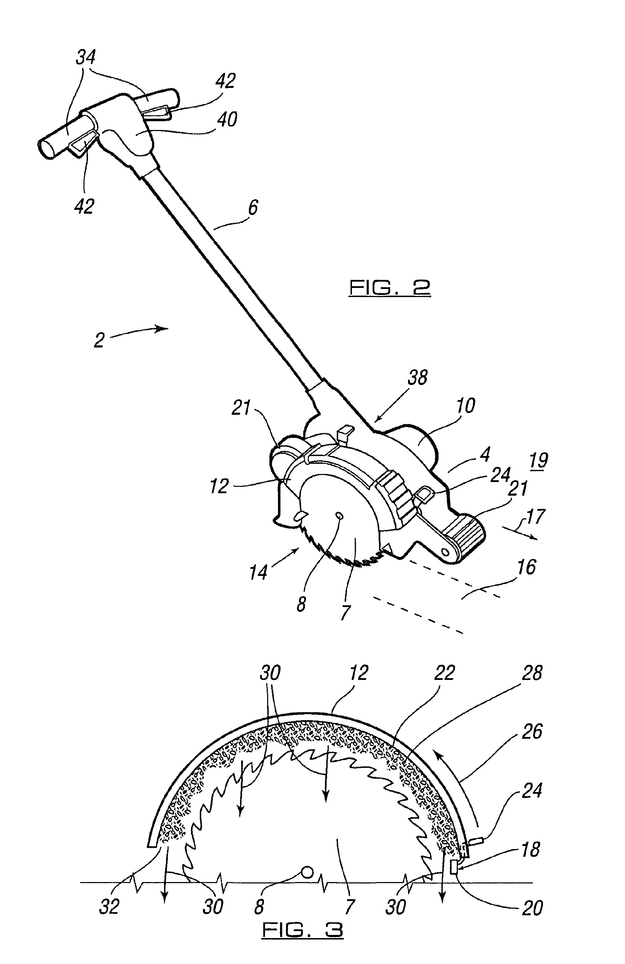

Referring now to Figures 1-3 there is disclosed a powered garden tool in the form of a lawn edger 2. The lawn edger 2 includes a cutting head 4 connected to a handle 6.

The handle 6 is elongate in form having two gripping portions 34 extending from a free end 36 thereof. The opposite end 38 of handle 6 is connected to cutting head 4 and can be rigidly fixed or pivotably mounted relative thereto. Control means 40 are provided between gripping portions 34 and these control means typically include an on/off switch for operating the tool. User actuation handles 42 are provided on gripping portions 34 and are movable with respect to gripping portions 34 to allow operation of the tool. The actuation handles are typically in communication with the control means via any suitable mechanism.

The cutting head 4 includes a circular blade 7 mounted for rotation about an axis 8 and connected to a motor 10. The blade is partially enclosed by a guard 12 such that at least an upper peripheral portion of the blade is enclosed. The blade prevents or restricts user access to cutting teeth or a cutting edge provided on the peripheral edge of the blade.

In use, one side 14 of the cutting head is provided to be located adjacent the edge 16 of a lawn 19 so as to provide the cutting effect on the edge of the lawn by the rotation of the blade 7 as it moves in direction 17 with wheels 21 supporting the cutting head on the lawn. The cutting head is typically located in a suitably shaped housing.

As already stated, rotation of the blade causes debris from the lawn to be thrown onto the inner surface of guard 12 and over time this can build up so as to block or reduce rotation of the blade, and or blunt the teeth of the blade.

In accordance with the invention a cleaning means 18 is provided and the operation of the same is shown in Figure 3. In normal use the cleaning means is provided with a part 20 mounted internally of the guard 12 which is shown in section in elevation and adjacent the internal surface 22. Surface 22 is typically the surface opposite the cutting teeth of the blade but could be any suitable surface within the guard.

When the tool is in use the internal cleaning part 20 is provided in a storage position at the end of the guard as shown in figure 3. When cleaning of the internal surface of the guard is required, the motor is switched off and a further portion of the cleaning means in the form of a lever 24 mounted externally of the cutting head is manipulated by the user. The lever 24 is connected to the part 20 in such a way that manipulation of the same causes the internal cleaning part 20 to move as indicated by arrow 26 along the length of the internal surface 22 of the guard. As the part 20 acts as a scraper, and is typically formed of a relatively thin metal plate, so the leading edge of the same cuts through the debris 28 on the inner surface as indicated. Internal part 20 is typically moved around the entire inner length of the guard to a stop position 32 located at an opposite end of the guard to the storage position, and so the guard is cleaned and the blade is free to rotate. It is envisaged that one or two passes of the part 20 will be sufficient to clean the guard and the part can then be returned to the storage position 18. Typically the lever 24 is connected to the part 20 by a linkage and guide means can be provided so as to guide the path of the part 20 along the inner surface of the guard. For example, an elongated slot can be defined in the guard in which lever 24 or linkage connecting lever 24 to part 20 can move in use.

The present invention therefore provides a cleaning means which is of potential use for any tool which includes a guarded blade, to allow the internal space between the guard and the blade and in particular the internal surface of the guard to be cleaned without the need for a person to risk their safety by placing their hands in to the space.

## Claims

1. A tool for performing a cutting operation, said tool including at least one cutting blade provided for movement to perform the cutting operation and a guard which covers at least part of the cutting blade, and wherein the tool further includes cleaning means, said cleaning means including a cleaning part positionable within the guard and controllable to allow relative movement between the guard and the said cleaning part.

2. A tool according to claim 1 wherein the cleaning part is positioned adjacent to or in contact with an inner surface of the guard.

3. A tool according to claim 1 wherein the cleaning part is positioned adjacent to or in contact with a surface of the cutting blade.

4. A tool according to claim 1 wherein the cleaning part communicates with a portion external to the guard and manipulation of the external portion causes relative movement of the cleaning part with respect to the guard.

5. A tool according to claim 4 wherein the external portion is in the form of a lever.

6. A tool according to claim 1 wherein the cleaning part is in the form of a scraper which, when moved relative to the guard, moves in contact with or adjacent to an inner surface of the guard and/or blade to remove debris therefrom.

7. A tool according to claim 1 wherein the cutting blade is circular and is provided for rotation about an axis.

8. A tool according to claim 7 wherein the cleaning means is mounted for movement about the same said axis.

9. A tool according to claim 1 wherein the cleaning means is mounted on the guard and is slidably movable relative thereto.

10. A tool according to claim 9 wherein the guard is provided with an elongate slot defined therein and the cleaning means is slidably movable in said slot.

11. A tool according to claim 1 wherein the cleaning means is mounted on the blade and is slidably movable relative thereto.

12. A tool according to claim 1 wherein the tool is provided with a cutting head and user actuation means are associated with the cutting head to allow actuation of the cleaning means.

13. A tool according to claim 1 wherein the tool is provided with a cutting head and handle means are attached to the cutting head, user actuation means being associated with the handle means to allow actuation of the cleaning means.

14. A tool according to claim 1 wherein the cleaning part is movable to a storage position when not in use, said storage position being in the form of a recess or at an end of the guard.

15. A tool according to claim 1 wherein the tool is in the form of a lawn edger.

16. A tool according to claim 15 wherein the lawn edger includes a cutting head, one or more wheel or roller members and handle means.

17. A tool according to claim 1 wherein powered drive means are provided to drive movement of the cutting blade in use.
